# EUROPEAN PATENT APPLICATION

(11) **EP 4 807 344 A1**
(43) Date of publication of application: **16.09.2026**
(21) Application number: 25166351.4
(22) Date of filing: 26.03.2025
(51) Int. Cl.: G01N 15/1404, G01N 15/1409, G01N 15/10

(54) **ANALYZING FLOW CYTOMETERS HAVING MULTIPLE ACQUISITION SPEEDS AND METHODS OF USING THE SAME**

(30) Priority: 11.03.2025 US 202519076246
(71) Applicant: Becton, Dickinson and Company, Franklin Lakes, NJ 07417-1880 (US)
(72) Inventor: Tucker, Lauren Rene, Franklin Lakes, 07417-1880 (US); Lankila, Henry J., Franklin Lakes, 07417-1880 (US); Pennebaker, Kory M., Franklin Lakes, 07417-1880 (US); Dembski, Kyle Thomas, Franklin Lakes, 07417-1880 (US)
(74) Representative: Arnold & Siedsma

(57) **Abstract**

Aspects of the present disclosure include analyzing flow cytometers having multiple acquisition speeds. To effectuate multiple acquisition speeds, the analyzing flow cytometer of the invention is configured to modulate a fluidic resistance in the waste line to control fluid velocity in the flow cell. Also provided is a method of processing a sample using the disclosed analyzing flow cytometer.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

### SUMMARY

Current analyzing flow cytometers are either imaging systems or high-speed analyzing systems and do not provide for variable speed to allow both functions in a single system. With only single function machines available, researchers, diagnosticians, and other users of flow cytometers are required to purchase two machines to have both functions. Possessing two machines adds significant costs in acquisition and maintenance as well as occupying valuable research space. The speed of many current cytometers is set by the fluidics that drive the samples through the cytometers.

The present disclosure provides a solution to this problem by modulating fluidic resistance within a waste line to control fluid velocity within a flow cell. The present disclosure modulates a fluidic resistance in the waste line to control the fluid velocity within the flow cell. By controlling the fluid velocity in this way, a single flow cytometer is able to operate in a high-speed analysis mode and a low-speed imaging mode, thus saving money and space within a laboratory.

Analyzing flow cytometers according to the present disclosure include a flow cell, a sample container receiving region, a sample line configured to fluidically transmit a sample from a sample container in the sample container receiving region to a sample injection port of the flow cell, a sheath fluid line configured to fluidically couple a sheath fluid reservoir to a sheath fluid injection port of the flow call, and a controller configured to modulate a fluidic resistance in the waste line to control fluid velocity in the flow cell. The controller can be configured to modulate fluidic resistance in the waste line by increasing fluidic resistance and decreasing fluidic resistance in the waste line. Increasing fluidic resistance in the waste line can decrease fluid velocity in the flow cell. The decrease in fluid velocity in the flow cell can be sufficient for particle imaging. The decreased fluid velocity in the flow cell can have a flow rate between 0.5 m/s and 2 m/s. The decreased fluid velocity in the flow cell can have a flow rate of 1 m/s. Decreasing fluidic resistance in the waste line can increase fluid velocity in the flow cell. The increase in fluid velocity in the flow cell can be sufficient for particle analysis. The increased fluid velocity in the flow cell can have a flow rate between 2.5 m/s and 7.5 m/s. The increased fluid velocity in the flow cell can have a flow rate of 5 m/s.

The analyzing flow cytometer can be configured to provide an option to a user to select among two or more different fluid velocities in the flow cell. The option to select among two or more different fluid velocities can be displayed to the user. A first velocity can be suitable for particle imaging. A second velocity can be suitable for particle analysis.

The analyzing flow cytometer may further include a fluidic resistance unit, wherein increasing fluidic resistance and decreasing fluidic resistance to the waste line comprises utilizing the fluidic resistance unit. The fluidic resistance unit may include an inlet a valve line fluidically coupled to the inlet, wherein the valve line comprises a series of fluidically coupled valves, a resistor line fluidically coupled to the inlet, wherein the resistor line comprises a series of fluidically coupled resistors, a plurality of connectors fluidically coupling the valve line to the resistor line, and an outlet. The valve line may include from 2 to 6 valves. The resistor line may include from 2 to 6 resistors. The fluidic resistance unit may include an equal number of resistors and valves. The inlet of the fluidic resistance unit can be fluidically coupled to the waste line such that fluid exiting the waste line enters the fluidic resistance unit. The outlet of the fluidic resistance unit can be fluidically coupled to the waste line such that fluid exiting the fluidic resistance unit enters the waste line. The fluidic resistance unit may be comprised within a manifold.

The analyzing flow cytometer may further include a light source configured to irradiate the flow cell at an interrogation point. A detector may be configured to collect particle-modulated light from the flow cell.

Aspects of the disclosure further include methods of flow cytometrically processing a sample, where the methods include introducing a particulate sample from a sample container into an analyzing flow cytometer, where the analyzing flow cytometer includes a flow cell, a sample container receiving region, a sample line configured to fluidically transmit a sample from a sample container in the sample container receiving region to a sample injection port of the flow cell, a sheath fluid line configured to fluidically couple a sheath fluid reservoir to a sheath fluid injection port of the flow call, and a controller configured to modulate a fluidic resistance in the waste line to control fluid velocity in the flow cell flow cytometrically processing the sample. Such flow cytometers are summarized above.

### BRIEF DESCRIPTION OF THE FIGURES

The disclosure may be best understood from the following detailed description when read in conjunction with the accompanying drawings. Included in the drawings are the following figures:
**FIG. 1A** presents a schematic of an analyzing flow cytometer according to the present disclosure.
**FIG. 1B** presents a schematic of a manifold included within an analyzing flow cytometer according to the present disclosure.
**FIG. 1C** presents a cross-sectioned schematic of a manifold included within an analyzing flow cytometer according to the present disclosure.
**FIG. 2** presents a flow cytometric system according to the present disclosure.
**FIG. 3** depicts an image-enabled particle analyzer according to the present disclosure.
**FIG. 4** depicts a functional block diagram of a particle analysis system according to the present disclosure.
**FIG. 5** depicts a depicts a functional block diagram for one example of a control system according to the present disclosure.
**FIG. 6** depicts aspects of a computer-controlled system according to the present disclosure.

### DETAILED DESCRIPTION

Aspects of the present disclosure include flow cytometers having multiple acquisition speeds. Flow cytometers according to the present disclosure include a flow cell, a sample container receiving region, a sample line configured to fluidically transmit a sample from a sample container in the sample container receiving region to a sample injection port of the flow cell, a sheath fluid line configured to fluidically couple a sheath fluid reservoir to a sheath fluid injection port of the flow call, and a controller configured to modulate a fluidic resistance in the waste line to control fluid velocity in the flow cell. Methods of cytometrically processing samples, e.g., in analysis and/or imaging applications, are also provided

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### MULTISPEED ANALYZING FLOW CYTOMETERS

As summarized above, aspects of the present disclosure include analyzing flow cytometers having multiple acquisition speeds. As summarized above, a flow cytometer may be an analyzing flow cytometer. The term "analyzing flow cytometer" refers to a flow cytometer configured for analyzing particles (including cells) suspended in a fluid stream. Fluid flow through an analyzing flow cytometer is typically connected to a waste container, such that the analyzed particles are disposed of as waste, rather than sorted and collected for further use or analysis. In analyzing flow cytometers, fluid flow may be driven by a vacuum pump connected to a waste line, which in turn may be fluidically coupled to the outlet of the flow cell, such that fluid may be drawn from the flow cell into the waste line under vacuum. "Multiple acquisition speeds" as used herein, refers to the ability of an analyzing flow cytometer to capture or acquire data at more than one fluid velocity within its flow cell. The multiple acquisition speeds add functionality to an analyzing flow cytometer, allowing a single flow cytometer to be used in a high-speed analysis mode with a faster fluid velocity and a low-speed imaging mode at a slower fluid velocity. As a single machine can now accomplish both imaging and analysis, research laboratories and/or diagnostic laboratories can now purchase a single machine, thus saving money on obtainment and maintenance, as well as occupying less space within the laboratory. Multiple acquisition speeds can be enabled by an adjustable fluidics system. The multiple speeds are effectuated by modulating fluidic resistance within a waste line of a flow cytometer. In the analyzing flow cytometer, fluid flow through the flow cell can be driven by a vacuum pump fluidically coupled to the waste line. By increasing fluidic resistance within the waste line, the fluid velocity decreases in the flow cell. The decreased fluid velocity can be sufficient for particle imaging. Similarly, by decreasing fluidic resistance in the waste line, fluid velocity increases in the flow cell. The increased fluid velocity can be sufficient for particle analysis.

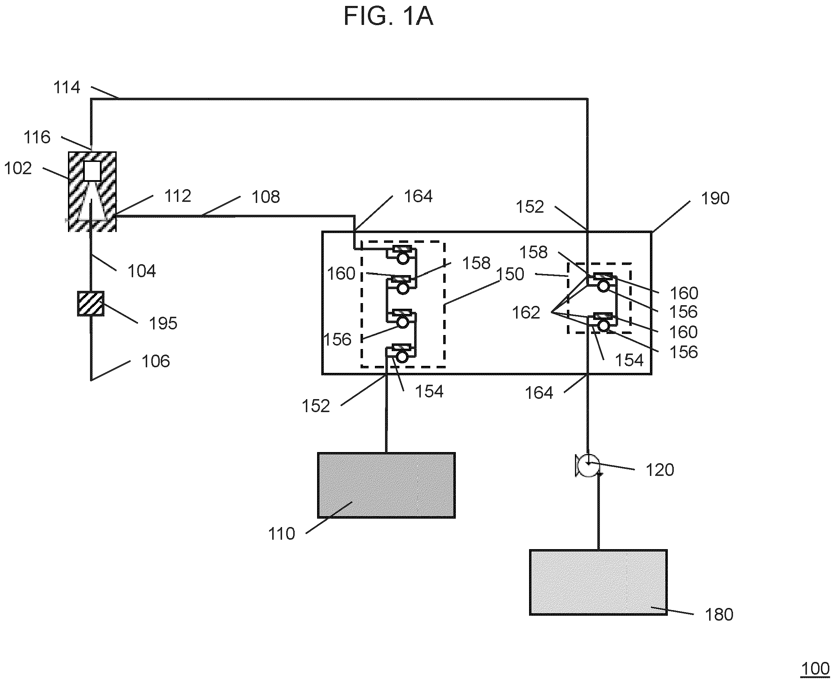

**FIG. 1A** illustrates a schematic of an analyzing flow cytometer 100 in accordance with the present disclosure. As illustrated analyzing flow cytometer 100 may include a flow cell 102, a sample container receiving region, a sample line 104 configured to fluidically transmit a sample from a sample container in the sample container receiving region to a sample injection port 106 of the flow cell 102, a sheath fluid line 108 configured to fluidically couple a sheath fluid reservoir 110 to a sheath fluid injection port 112 of the flow cell, a waste line 114 fluidically coupled to an outlet 116 of the flow cell 102, and a controller configured to modulate a fluidic resistance in the waste line 114 to control fluid velocity in the flow cell 102. The controller can be configured to modulate fluidic resistance in the waste line 114 by increasing fluidic resistance and decreasing fluidic resistance to the waste line 114.

The fluid flow through the flow cytometer 100 may be driven by a vacuum pump 120. As noted above, increasing fluidic resistance in the waste line 114 decreases fluid velocity in the flow cell 102, as it slows the fluid flow to the vacuum pump 120. The decrease in fluid velocity in the flow cell 102 can be sufficient for particle imaging. The decreased fluid velocity in the flow cell 102 can have a flow rate between 0.5 meters per second (m/s) and 2 m/s. In the present disclosure, the decreased fluid velocity in the flow cell 102 has a flow rate of 1 m/s. Again, as noted above, decreasing fluidic resistance in the waste line 114 increases fluid velocity in the flow cell 102. The increase in fluid velocity in the flow cell 102 can be sufficient for particle analysis. The increased fluid velocity in the flow cell 102 can have a flow rate between 2.5 m/s and 7.5 m/s. The increased fluid velocity in the flow cell 102 can have has a flow rate of 5 m/s.

The functionality to alter speed in the flow cell can be provided by a fluidic resistance unit 150, where increasing fluidic resistance and decreasing fluidic resistance in the waste line comprises utilizing the fluidic resistance unit 150. Fluidic resistance units can include an inlet 152, a valve line 154 fluidically coupled to the inlet 152, where the valve line 154 includes a series of fluidically coupled valves 156, a resistor line 158 fluidically coupled to the inlet 152, where the resistor line 158 comprises a series of fluidically coupled resistors 160, a plurality of connectors 162 fluidically coupling the valve line 158 to the resistor line 154, and an outlet 164, where one or both of the inlet 152 and the outlet 164 are fluidically coupled to the waste line 114. The number of valves 156 in the valve line 154 can be any number valves 156 to allow modulation of fluidic resistance to produce a fluid velocity sufficient for imaging and/or analysis. The valve line 154 can include from 1 to 10 valves 156, such as 1 valve, 2 valves, 3 valves, 4 valves, 5 valves, 6 valves, 7 valves, 8 valves, 9 valves, or 10 valves. The valve line 154 can comprise 2 to 6 valves 156. Similarly, the number of resistors 160 in the resistor line 158 can be any number resistors 160 to allow modulation of fluidic resistance to produce a fluid velocity sufficient for imaging and/or analysis. The resistor line 158 can include from 1 to 10 resistors 160, such as 1 resistor, 2 resistors, 3 resistors, 4 resistors, 5 resistors, 6 resistors, 7 resistors, 8 resistors, 9 resistors, or 10 resistors. The resistor line 158 can comprise 2 to 6 resistors 160.The fluidic resistance unit 150 can comprise an equal number of resistors 160 and valves 156-e.g., 2 valves and 2 resistors, 3 valves and 3 resistors, 4 valves and 4 resistors, etc. Additional details of a fluidic resistance unit 150 are disclosed in PCT Pat. App. No.: US/ US2023/023873, published as WO 2023/239566.

As noted above, one or both of the inlet 152 and the outlet 164 may be fluidically coupled to the waste line 154. When both the inlet 152 and the outlet 164 are fluidically coupled to the waste line 114, the fluidic resistance unit is "in-line" with the waste line 114, such that fluid in the waste line 114 enters the fluidic resistance unit 150 via the inlet 152 and exits the fluidic resistance unit 150 via the outlet 164 into a second length of the waste line 114. The fluid will then pass to a waste container 180.

The inlet 152 of the fluidic resistance unit 150 can be fluidically coupled to the waste line 114 such that fluid exiting the waste line 114 enters the fluidic resistance unit 150. For example, fluid traveling from the waste line 114 into the fluidic resistance unit 150 via the inlet 152 and exits the fluidic resistance unit 150 directly (and/or via a connector) into a waste container 180.

The outlet 164 of the fluidic resistance unit 150 can be fluidically coupled to the waste line 114 such that fluid exiting the fluidic resistance unit 150 enters the waste line 115. For example, fluid may travel directly (and/or via a connector) from the flow cell 102 to the fluidic resistance unit 150 and exit the fluidic resistance unit 150 via the outlet 164 into the waste line 114.

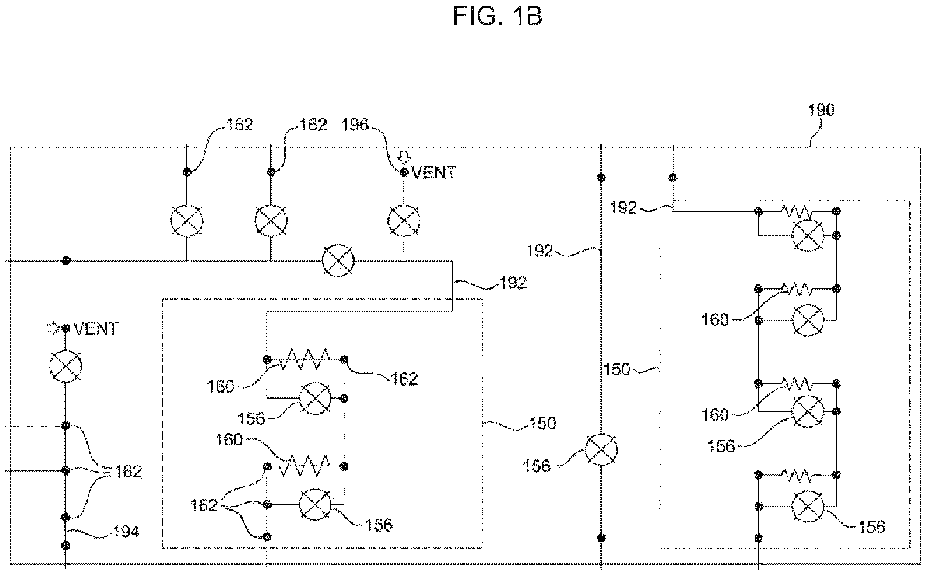

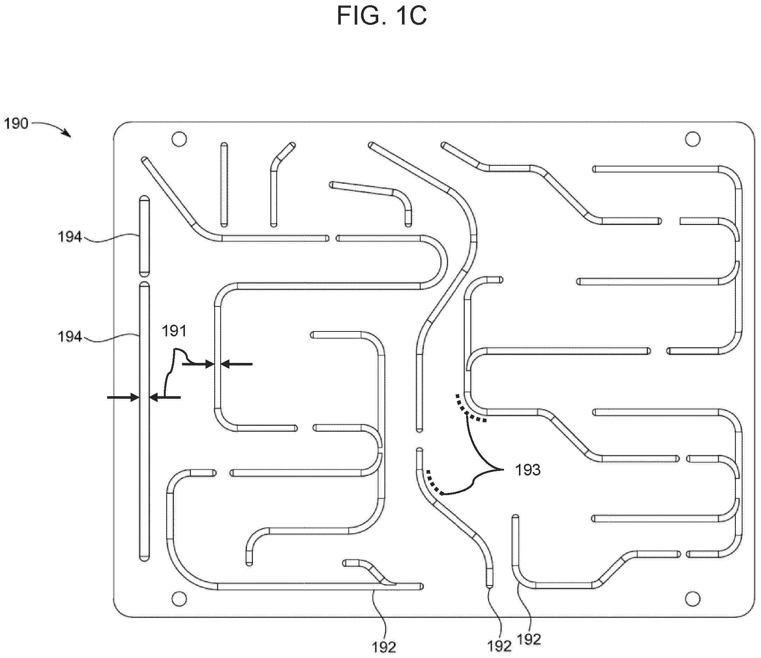

The fluidic resistance unit 150 can be housed within a manifold 190. **FIGs. 1B-1C** illustrate various views of a manifold 190 in accordance with the present disclosure, where **FIG. 1B** illustrates an obverse face of the manifold 190, and **FIG. 1C** illustrates a cross-sectioned schematic of fluid lines through manifold 190. As illustrated, the manifold 190 can be a singular component comprising one or more liquid passages 192, one or more air passages 194, one or more vents 196, one or more resistors 160, one or more valves (or valve mounts) 156, and one or more connection points for liquid or air lines 162. As illustrated in **FIG. 1A****,** the resistors 160and valves 156 may be organized into one or more fluidic resistance units 150. By housing the one or more liquid passages 192, one or more air passages 194, one or more vents 196, one or more resistors 160 , one or more valves (or valve mounts) 156, and one or more connection points 162 for liquid 192 or air lines194 , and into a manifold 190, the present disclosure can minimize potential failure points, reduce effort to route tubing throughout an analyzing flow cytometer, and organize fluidic lines. The manifold 190 can enable a reduced machine footprint and reduces a number of parts required for the flow cytometer. Overall, the manifold 190 may reduce costs of the manufacture and/or maintenance of an analyzing flow cytometer.

One or more of the liquid passages 192, one or more of the air passages 194, or both, can have a thickness 191, a bend radius 193, or both that is configured to enhance fluid flow therein. One or more of the liquid passages 192, one or more of the air passages 194, or both, can have a thickness 191, a bend radius 193, or both that is configured to reduce and/or eliminate turbulence as the fluid travels between fittings coupled to the manifold 190. One or more of the liquid passages 192, one or more of the air passages 194, or both, can have a thickness 191 of about 1 mm to about 5 mm. One or more of the liquid passages 192, one or more of the air passages 194, or both, can have a thickness 191 of about 2 mm to about 5 mm, about 3 mm to about 5 mm, about 4 mm to about 5 mm, about 1 mm to about 4 mm, about 1 mm to about 3 mm, about 1 mm to about 2 mm, about 2 mm to about 4 mm, about 2 mm to about 3 mm, or about 3 mm to about 4 mm. One or more of the liquid passages 192 can have a thickness 191 of about 1 mm to about 3 mm, about 2 mm, or about 2.1 mm. One or more of the air passages 194 can have a thickness of about 2 mm to about 4 mm, about 3 mm, or about 3.2 mm. One or more of the liquid passages 192, one or more of the air passages 194, or both, can have a bend radius 193 of about 3 mm to about 18 mm. One or more of the liquid passages 192, one or more of the air passages 194, or both, can have a bend radius 193 of about 6 mm to about 18 mm, about 6 mm to about 15 mm, about 6 mm to about 12 mm, about 6 mm to about 9 mm, about 9 mm to about 18 mm, about 9 mm to about 15 mm, about 9 mm to about 12 mm, about 12 mm to about 18 mm, about 12 mm to about 15 mm, or about 15 to about 18 mm. One or more of the air passages 194 can have a bend radius 193 of about 6 mm to about 15 mm. It should be noted that for the sake of clarity a limited number of air passages 194, liquid passages 192, thicknesses 191, and bend radii 193 are marked. A person of skill in the art will understand that **FIG. 1C** includes additional, unmarked air passages 194, liquid passages 192, thicknesses 191, and bend radii 193

The fluidic resistance unit 150, may include a flow meter 195 to measure fluid velocity through the flow cell 102. As noted above, the fluidic resistance unit 150 can modulate fluidic resistance in a waste line to control fluid velocity with the flow cell 102. Thus, a flow meter 195 can serve as a confirmation of flow rate suitable for imaging or analysis. Alternatively or additionally, the flow meter 195 can serve as feedback for control of a fluidic resistance unit 150. For example, based on flow rate, a controller may toggle a valve within a fluidic resistance unit 150 to increase or decrease the fluidic resistance in the waste line, thus altering flow speed respectively. A flow meter 195 can be placed in or near the flow cell 102, to provide an accurate measurement of fluid velocity. The flow meter 195 can be located on the sample line 104.

The analyzing flow cytometer can be configured to provide an option to select among two or more different fluid velocities in the flow cell 102 to a user. An option for fluid velocities may include a first fluid velocity that is suitable for particle imaging and a second fluid velocity that is suitable for particle analysis. Options for a fluid velocity may be provided via a display or a toggle position. For example, a user may toggle between an "imaging" and an "analysis" using a switch or knob, where the position of the switch or knob selects the particular velocity option. Alternatively or additionally, a graphical display may display the option for a fluid velocity. When using a graphical display, selection of a fluid velocity may utilize one or more peripheral input devices (e.g., mouse, pointer, knob, etc.). Options for a specific fluid velocity (e.g., a numerical value between 0.5 m/s and 7.5 m/s), may be provided. A user may select a specific fluid velocity using a keyboard, number pad, or other input device that allows entry of a specific fluid velocity value.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. Cuvettes can be formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

The flow cell may include, or is configured for use with, a sample injection port configured to provide a sample to the flow cell. The sample injection system can be configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In the present disclosure, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the sample injection port may be referred to as a "sample line." Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

The flow cell may also include a sheath fluid injection port configured to provide a sheath fluid to the flow cell. The sheath fluid injection system may be configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

The sheath fluid injection port can be an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. The flow cytometer may include a single light source. Alternatively, the flow cytometers may include a plurality of light sources. The number of light sources can range from 2 to 10, such as 2 to 5, and including 2 to 4. Any convenient light source may be employed as the light source described herein. The light source can be a laser. The laser may be any convenient laser, such as a continuous wave laser. For example, the laser may be a diode laser, such as an ultraviolet diode laser, a visible diode laser and a near-infrared diode laser. The laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to the present disclosure may also include one or more optical adjustment components. In the present disclosure, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In the present disclosure, flow cytometers of interest include one or more focusing lenses. The focusing lens, in one example, may be a de-magnifying lens. The flow cytometer may include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

Light sources of interest may include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In the present disclosure, lasers of interest may include one or more of a 405 nm laser, a 488 nm laser, a 561 nm laser and a 635 nm laser.

In the present disclosure, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. The laser may be a pulsed lasers or continuous wave laser. For example, lasers in light beam generators of interest include those listed above.

The acousto-optic device may be any convenient acousto-optic protocol configured to frequency shift laser light using applied acoustic waves. In the present disclosure, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

A controller can be configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In the present disclosure, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. The memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In the present disclosure, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. The controller may have a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. The controller may have a processor having memory operably coupled to the processor such that the memory includes instructions stored thereon, which when executed by the processor, cause the processor to produce an output laser beam having an intensity profile with a Gaussian distribution along the horizontal axis. The controller may have a processor having memory operably coupled to the processor such that the memory includes instructions stored thereon, which when executed by the processor, cause the processor to produce an output laser beam having a top hat intensity profile along the horizontal axis.

Light beam generators may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. Systems can be configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). The flow cytometer may include a single side-scattered light detector. The flow cytometer may include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

The flow cytometer may also include a fluorescent light detector configured to detect one or more fluorescent wavelengths of light. The flow cytometer may include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, the first fluorescent light detector may be a CCD-type device and the second fluorescent light detector (or imaging sensor) may be a CMOS-type device. Both the first and second fluorescent light detectors may be CCD-type devices. Both the first and second fluorescent light detectors may be CMOS-type devices. The first fluorescent light detector may be a CCD-type device and the second fluorescent light detector may be a photomultiplier tube (PMT). The first fluorescent light detector may be a CMOS-type device and the second fluorescent light detector may be a photomultiplier tube. Both the first and second fluorescent light detectors may be photomultiplier tubes.

The fluorescent light detectors may be configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. 2 or more detectors in the modules as described herein can be configured to measure the same or overlapping wavelengths of collected light.

The fluorescent light detector can be configured to measure collected light over a range of wavelengths (e.g., 200 nm - 1000 nm). In the present disclosure, detectors of interest are configured to collect spectra of light over a range of wavelengths. For example, the flow cytometer may include one or more detectors configured to collect spectra of light over one or more of the wavelength ranges of 200 nm - 1000 nm. Detectors of interest may be configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In the present disclosure, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer, or the like.

The subject system can be a flow cytometric system, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

The flow cytometer can be configured as an imaging flow cytometer. For example, the subject system can be a flow cytometry system configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

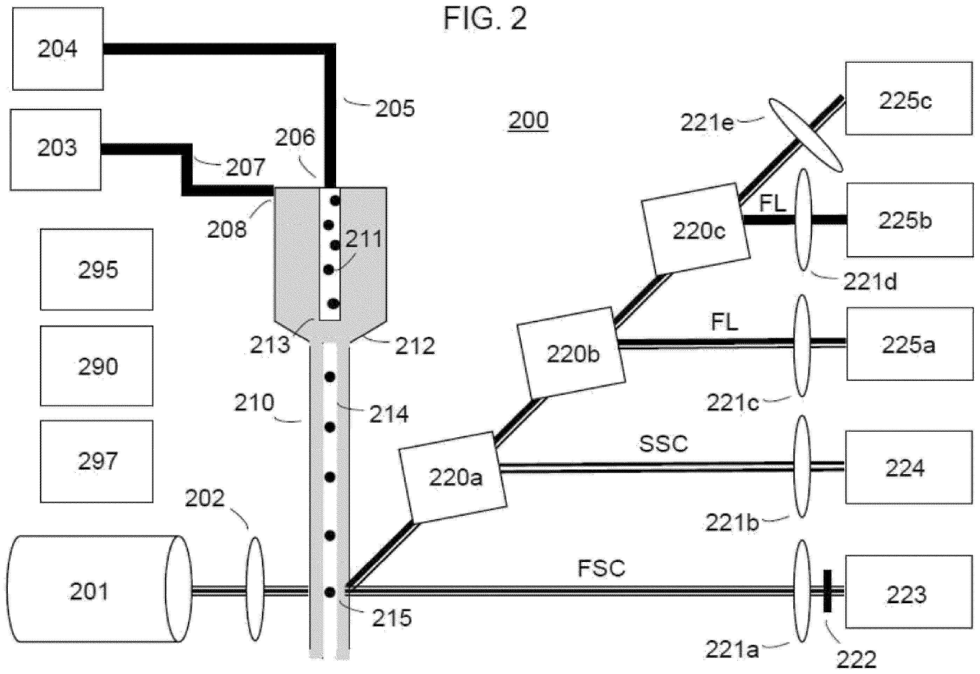

**FIG. 2** shows a system 200 for flow cytometry in accordance with the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of the flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. A display may also form part of the I/O capabilities 297 for presenting experimental data to users of the cytometer 200. Alternatively, some or all of the memory 295 and controller/processor 290 and I/O capabilities may be part of one or more external devices such as a general purpose computer. Some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

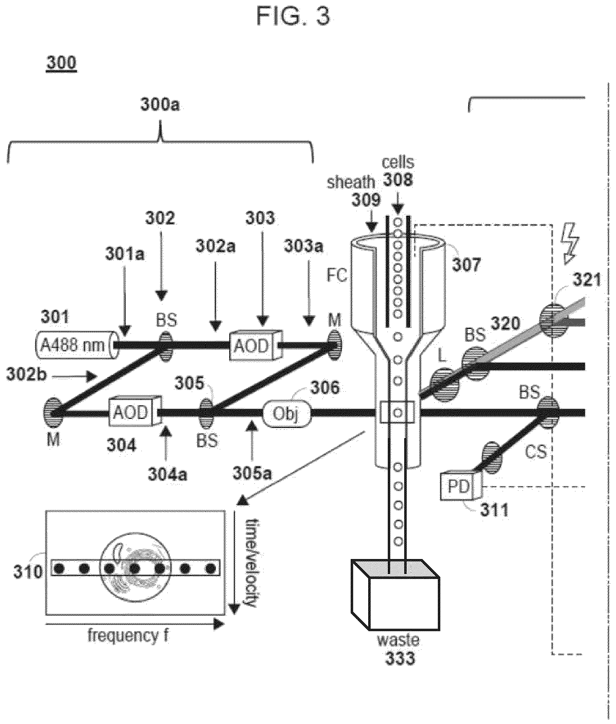

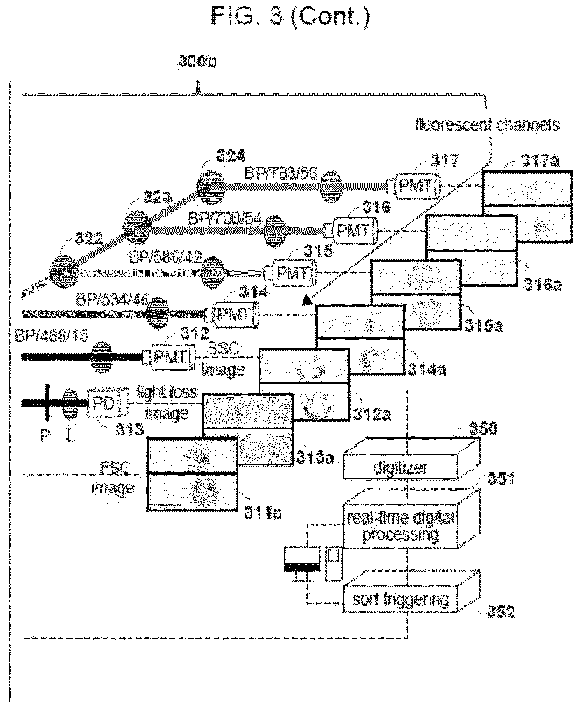

In the present disclosure, systems are a fluorescence imaging using radiofrequency tagged emission image-enabled particle analysis, such as depicted in **FIG. 3****.** Flow cytometer 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In the present disclosure, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In the present disclosure, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. Forward scatter detector 311 and side scatter detector 312 may be photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351.

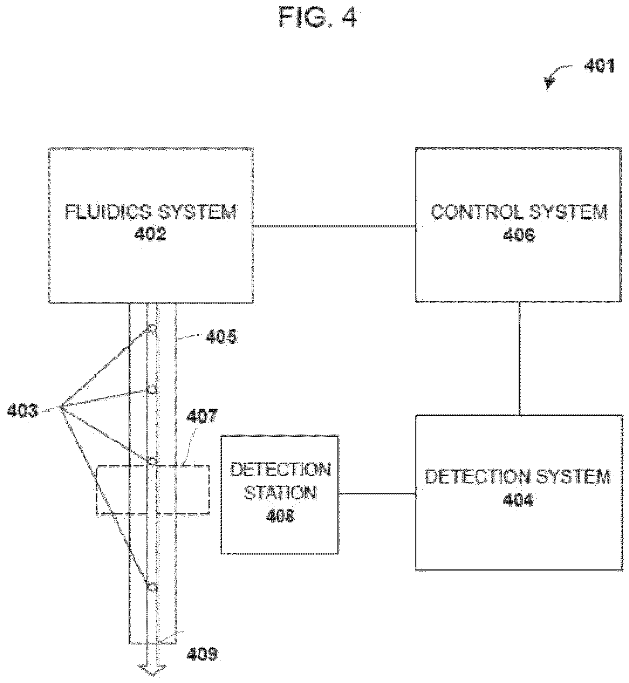

Systems may be particle analyzers where the particle analysis system 401 (**FIG. 4**) can be used to analyze and characterize particles. **FIG. 4** shows a functional block diagram of a particle analysis system for computational based sample analysis and particle characterization. The particle analysis system 401can be a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

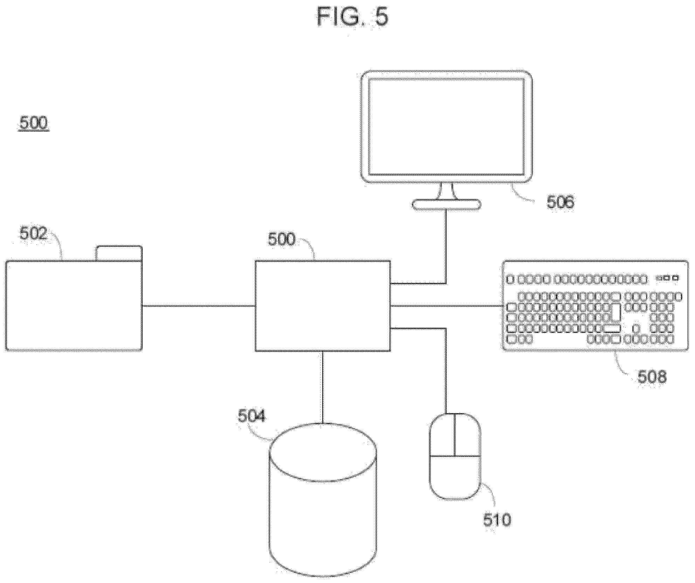

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer 502 can be configured to acquire biological event data. For example, a flow cytometer can generate flow cytometric event data. The particle analyzer 502 can be configured to provide biological event data to the analytics controller 500. A data communication channel can be included between the particle analyzer 502 and the analytics controller 500. The biological event data can be provided to the analytics controller 500 via the data communication channel.

The analytics controller 500 can be configured to receive biological event data from the particle analyzer 502. The biological event data received from the particle analyzer 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. The gate can be a logical combination of one or more graphical regions of interest drawn upon a single parameter histogram or bivariate plot. The display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506.

The analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

### METHODS

The present disclosure includes a method of flow cytometrically processing a sample. Flow cytometrically processing may include selecting a fluid velocity. As noted above, a user may select from a fluid velocity that is suitable for particle imaging and/or a fluid velocity that is suitable for particle analysis. Options for a fluid velocity may be provided via a display or a toggle position. For example, a user may toggle between an "imaging" and an "analysis" using a switch or knob, where the position of the switch or knob selects the particular velocity option. Alternatively or additionally, a graphical display may display the option for a fluid velocity. When using a graphical display, selection of a fluid velocity may utilize one or more peripheral input devices (e.g., mouse, pointer, knob, etc.). Options for a specific fluid velocity (e.g., a numerical value between 0.5 m/s and 7.5 m/s) may be provided. A user may select a specific fluid velocity using a keyboard, number pad, or other input device that allows entry of a specific fluid velocity value. The fluid velocity may be between 0.5 m/s and 2 m/s. The fluid velocity can be 1 m/s. The fluid velocity can be between 2.5 m/s and 7.5 m/s. The fluid velocity can be 5 m/s. Selecting a fluid velocity may occur before flow cytometrically processing the sample. Flow cytometrically processing the sample may occur before selecting a fluid velocity.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In the present disclosure, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In the present disclosure the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in the present disclosure the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. The system can be configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. The target cell can be selected from HIV containing cell, a Treg cell, an antigen-specific T - cell populations, tumor cells or hematopoietic progenitor cells (CD34+) from whole blood, bone marrow or cord blood.

In practicing the subject methods, an amount of an initial fluidic sample is injected into the flow cytometer.

The present disclosure includes counting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In the present disclosure, methods include irradiating a planar cross-section of the flow stream in the sample interrogation region, such as with a laser (as described above). The method may include irradiating a predetermined length of the flow stream in the sample interrogation region, such as corresponding to the irradiation profile of a diffuse laser beam or lamp.

In the present disclosure, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In the present disclosure, methods include irradiating the flow stream immediately adjacent to the flow cell nozzle orifice.

Detectors, such as photomultiplier tubes (PMT), can be used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In the present disclosure, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in the present disclosure also include data acquisition, analysis and recording, such as with a computer, wherein multiple data channels record data from each detector for the light scatter and fluorescence emitted by each particle as it passes through the sample interrogation region. Analysis may include classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

### COMPUTER-CONTROLLED SYSTEMS

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may include analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

A computer program product is described which can comprise a computer usable medium having control logic (computer software program, including program code) stored therein. The control logic, when executed by the processor the computer, causes the processor to perform functions described herein. Some functions may be implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

The system according to the present disclosure may be configured to include a communication interface. The communication interface may include a receiver and/or transmitter for communicating with a network and/or another device. The communication interface can be configured for wired or wireless communication, including, but not limited to, radio frequency (RF) communication (e.g., RadioFrequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

The communication interface can be configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

The communication interface can be configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

The communication interface can be configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

The subject system can be configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. The server device can have a display, such as a liquid crystal display (LCD), as well as an input device, such as buttons, a keyboard, mouse or touch-screen.

The communication interface can be configured to automatically or semiautomatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

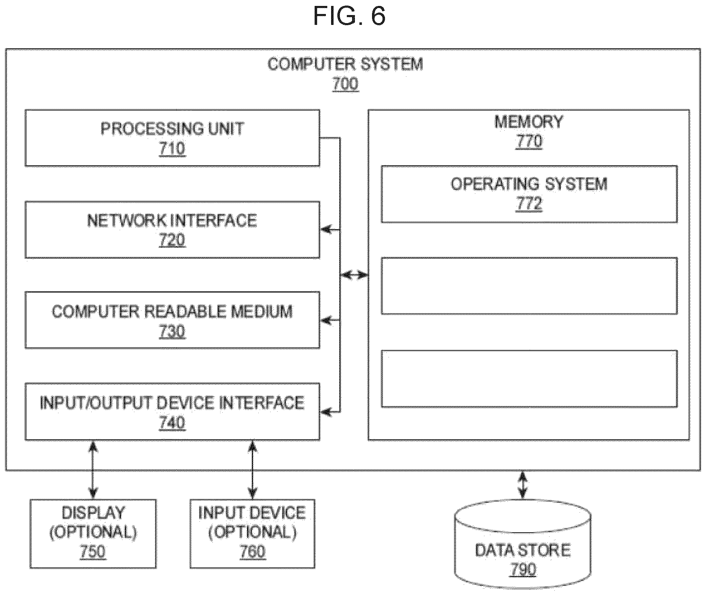

**FIG. 6** depicts a general architecture of an example computing device 700 according to the present disclosure. The general architecture of the computing device 700 depicted in **FIG. 6** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components) that the processing unit 710 executes. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### UTILITY

The present disclosure can be used in applications where cells from a biological sample may be analyzed for research or laboratory testing, including diagnostics. The subject method and device may facilitate analyzing individual cells prepared from a target fluidic or tissue biological sample. For example, the subject methods and systems facilitate analyzing cells from fluidic or tissue samples to be used as a research or diagnostic specimen for diseases such as cancer.

Notwithstanding the appended claims, the disclosure is also defined by the following clauses:
1. An analyzing flow cytometer comprising:
   a flow cell;
   a sample container receiving region;
   a sample line configured to fluidically transmit a sample from a sample container in the sample container receiving region to a sample injection port of the flow cell;
   a sheath fluid line configured to fluidically couple a sheath fluid reservoir to a sheath fluid injection port of the flow cell;
   a waste line fluidically coupled to an outlet of the flow cell; and
   a controller configured to modulate a fluidic resistance in the waste line to control fluid velocity in the flow cell.
2. The analyzing flow cytometer according to Clause 1, wherein the controller is configured to modulate fluidic resistance in the waste line by increasing fluidic resistance and decreasing fluidic resistance to the waste line.
3. The analyzing flow cytometer according to Clause 2, wherein increasing fluidic resistance in the waste line decreases fluid velocity in the flow cell.
4. The analyzing flow cytometer according to Clause 3, wherein the decrease in fluid velocity in the flow cell is sufficient for particle imaging.
5. The analyzing flow cytometer according to Clause 3 or 4, wherein the decreased fluid velocity in the flow cell has a flow rate between 0.5 m/s and 2 m/s.
6. The analyzing flow cytometer according to any of the clauses 3-5, wherein the decreased fluid velocity in the flow cell has a flow rate of 1 m/s.
7. The analyzing flow cytometer according to any of the clauses 2-6, wherein decreasing fluidic resistance in the waste line increases fluid velocity in the flow cell.
8. The analyzing flow cytometer according to Clause 7, wherein the increase in fluid velocity in the flow cell is sufficient for particle analysis.
9. The analyzing flow cytometer according to Clause 7 or 8, wherein the increased fluid velocity in the flow cell has a flow rate between 2.5 m/s and 7.5 m/s.
10. The analyzing flow cytometer according to any of the clauses 7-9 wherein the increased fluid velocity in the flow cell has a flow rate of 5 m/s.
11. The analyzing flow cytometer according to any of the preceding clauses wherein the analyzing flow cytometer is configured to provide an option to select among two or more different fluid velocities in the flow cell to a user.
12. The analyzing flow cytometer according to Clause 11, wherein the option to select among two or more different fluid velocities is displayed to the user.
13. The analyzing flow cytometer according to Clause 11 or 12, wherein a first velocity is suitable for particle imaging.
14. The analyzing flow cytometer according to any of the clauses 11-13, wherein a second velocity is suitable for particle analysis.
15. The analyzing flow cytometer according to any of the clauses 2-14, further comprising a fluidic resistance unit, wherein increasing fluidic resistance and decreasing fluidic resistance to the waste line comprises utilizing the fluidic resistance unit.
16. The analyzing flow cytometer according to Clause 15, wherein the fluidic resistance unit comprises:
   an inlet;
   a valve line fluidically coupled to the inlet, wherein the valve line comprises a series of fluidically coupled valves;
   a resistor line fluidically coupled to the inlet, wherein the resistor line comprises a series of fluidically coupled resistors;
   a plurality of connectors fluidically coupling the valve line to the resistor line; and
      an outlet,
   wherein one or both of the inlet and the outlet are fluidically coupled to the waste line.
17. The analyzing flow cytometer according to Clause 16, wherein the valve line comprises from 2 to 6 valves.
18. The analyzing flow cytometer according to Clause 16 or 17, wherein the resistor line comprises from 2 to 6 resistors.
19. The analyzing flow cytometer according to any one of Clauses 16-18, wherein the fluidic resistance unit comprises an equal number of resistors and valves.
20. The analyzing flow cytometer according to any of Clauses 16-19, wherein the inlet of the fluidic resistance unit is fluidically coupled to the waste line such that fluid exiting the waste line enters the fluidic resistance unit.
21. The analyzing flow cytometer according to any one of Clauses 16-20, wherein the outlet of the fluidic resistance unit is fluidically coupled to the waste line such that fluid exiting the fluidic resistance unit enters the waste line.
22. The analyzing flow cytometer according to any one of Clauses 15-21, wherein the fluidic resistance unit is comprised within a manifold.
23. The analyzing flow cytometer according to any one of Clauses 1-22, further comprising a light source configured to irradiate the flow cell at an interrogation point.
24. The analyzing flow cytometer according to any one of Clauses 1-23, further comprising a detector configured to collect particle-modulated light from the flow cell.
25. A method of flow cytometrically processing a sample, the method comprising:
   a) introducing a particulate sample from a sample container into an analyzing flow cytometer, wherein the analyzing flow cytometer comprises:
      a flow cell;
      a sample container receiving region;
      a sample line configured to fluidically transmit a sample from a sample container in the sample container receiving region to a sample injection port of the flow cell;
      a sheath fluid line configured to fluidically couple a sheath fluid reservoir to a sheath fluid injection port of the flow cell;
      a waste line fluidically coupled to an outlet of the flow cell; and
      a controller configured to modulate a fluidic resistance in the waste line to control fluid velocity in the flow cell; and
   b) flow cytometrically processing the sample.
26. The method according to Clause 25, wherein the controller is configured to modulate fluidic resistance in the waste line by increasing fluidic resistance and decreasing fluidic resistance to the waste line.
27. The method according to Clause 26, wherein increasing fluidic resistance in the waste line decreases fluid velocity in the flow cell.
28. The method according to Clause 27, wherein the decrease in fluid velocity in the flow cell is sufficient for particle imaging.
29. The method according to Clause 27 or 28, wherein the decreased fluid velocity in the flow cell has a flow rate between 0.5 m/s and 2 m/s.
30. The method according to any of the clauses 27-29, wherein the decreased fluid velocity in the flow cell has a flow rate of 1 m/s.
31. The method according to any of the clauses 26-30 wherein decreasing fluidic resistance in the waste line increases fluid velocity in the flow cell.
32. The method according to Clause 31, wherein the increase in fluid velocity in the flow cell is sufficient for particle analysis.
33. The method according to Clause 31 or 32, wherein the increased fluid velocity in the flow cell has a flow rate between 2.5 m/s and 7.5 m/s.
34. The method according to any of the clauses 31-33 wherein the increased fluid velocity in the flow cell has a flow rate of 5 m/s.
35. The method according to any of the clauses 25-34, wherein the analyzing flow cytometer is configured to provide an option to select among two or more different fluid velocities in the flow cell to a user and the method comprises selecting a fluid velocity.
36. The method according to Clause 35, wherein the option to select among two or more different fluid velocities is displayed to the user.
37. The method according to Clause 35 or 36, wherein a first fluid velocity is suitable for particle imaging.
38. The method according to any of the clauses 35-37, wherein a second fluid velocity is suitable for particle analysis.
39. The method according to any one of Clauses 35-38, further comprising: c) selecting a fluid velocity.
40. The method according to Clause 39, wherein the fluid velocity is suitable for particle imaging.
41. The method according to Clause 39 or 40, wherein the fluid velocity is suitable for particle analysis.
42. The method according to any of the clauses 39-41, wherein the fluid velocity is between 0.5 m/s and 2 m/s.
43. The method according to any of the clauses 39-42 wherein the fluid velocity is 1 m/s.
44. The method according to Clause 39, wherein the fluid velocity is between 2.5 m/s and 7.5 m/s.
45. The method according to Clause 39, wherein the fluid velocity is 5 m/s.
46. The method according to any one of Clauses 39-45, wherein c) selecting a fluid velocity occurs before b) flow cytometrically processing the sample.
47. The method according to any one of Clauses 39-46, wherein b) flow cytometrically processing the sample occurs before c) selecting a fluid velocity.
48. The method according to any of the clauses 26-47, wherein the analyzing flow cytometer further comprises a fluidic resistance unit, wherein increasing fluidic resistance and decreasing fluidic resistance to the waste line comprises utilizing the fluidic resistance unit.
49. The method according to Clause 48, wherein the fluidic resistance unit comprises:
   an inlet;
   a valve line fluidically coupled to the inlet, wherein the valve line comprises a series of fluidically coupled valves;
   a resistor line fluidically coupled to the inlet, wherein the resistor line comprises a series of fluidically coupled resistors;
   a plurality of connectors fluidically coupling the valve line to the resistor line; and
   an outlet,
   wherein one or both of the inlet and the outlet are fluidically coupled to the waste line.
50. The method according to Clause 49, wherein the valve line comprises from 2 to 6 valves.
51. The method according to Clause 49 or 50, wherein the resistor line comprises from 2 to 6 resistors.
52. The method according to any one of Clauses 49-51, wherein the fluidic resistance unit comprises an equal number of resistors and valves.
53. The method according to any one of Clauses 49-52, wherein the inlet of the fluidic resistance unit is fluidically coupled to the waste line such that fluid exiting the waste line enters the fluidic resistance unit.
54. The method according to any one of Clauses 49-53, wherein the outlet of the fluidic resistance unit is fluidically coupled to the waste line such that fluid exiting the fluidic resistance unit enters the waste line.
55. The method according to any one of Clauses 49-54, wherein the fluidic resistance unit is comprised within a manifold.
56. The method according to any one of Clauses 25-55, wherein the analyzing flow cytometer further comprises a light source configured to irradiate the flow cell at an interrogation point.
57. The method according to any one of Clauses 25-56, wherein the analyzing flow cytometer further comprises a detector configured to collect particle-modulated light from the flow cell.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions.

## Claims

1. An analyzing flow cytometer comprising:
a flow cell;
a sample container receiving region;
a sample line configured to fluidically transmit a sample from a sample container in the sample container receiving region to a sample injection port of the flow cell;
a sheath fluid line configured to fluidically couple a sheath fluid reservoir to a sheath fluid injection port of the flow cell;
a waste line fluidically coupled to an outlet of the flow cell; and
a controller configured to modulate a fluidic resistance in the waste line to control fluid velocity in the flow cell.

2. The analyzing flow cytometer according to Claim 1, wherein the controller is configured to modulate fluidic resistance in the waste line by increasing fluidic resistance and decreasing fluidic resistance to the waste line.

3. The analyzing flow cytometer according to Claim 2, wherein increasing fluidic resistance in the waste line decreases fluid velocity in the flow cell, preferably with one or more of the following:
- wherein the decrease in fluid velocity in the flow cell is sufficient for particle imaging;
- wherein the decreased fluid velocity in the flow cell has a flow rate between 0.5 m/s and 2 m/s;
- wherein the decreased fluid velocity in the flow cell has a flow rate of 1 m/s;
- wherein decreasing fluidic resistance in the waste line increases fluid velocity in the flow cell.

4. The analyzing flow cytometer according to Claim 3, with one or more of the following:
- wherein the increase in fluid velocity in the flow cell is sufficient for particle analysis;
- wherein the increased fluid velocity in the flow cell has a flow rate between 2.5 m/s and 7.5 m/s;
- wherein the increased fluid velocity in the flow cell has a flow rate of 5 m/s.

5. The analyzing flow cytometer according to any of the preceding claims wherein the analyzing flow cytometer is configured to provide an option to select among two or more different fluid velocities in the flow cell to a user.

6. The analyzing flow cytometer according to Claim 5 with one or more of the following:
- wherein the option to select among two or more different fluid velocities is displayed to the user;
- wherein a first velocity is suitable for particle imaging;
- wherein a second velocity is suitable for particle analysis.

7. The analyzing flow cytometer according to any of the preceding claims 2-6, further comprising a fluidic resistance unit, wherein increasing fluidic resistance and decreasing fluidic resistance to the waste line comprises utilizing the fluidic resistance unit.

8. The analyzing flow cytometer according to any of the preceding claims, wherein the fluidic resistance unit comprises:
an inlet;
a valve line fluidically coupled to the inlet, wherein the valve line comprises a series of fluidically coupled valves;
a resistor line fluidically coupled to the inlet, wherein the resistor line comprises a series of fluidically coupled resistors;
a plurality of connectors fluidically coupling the valve line to the resistor line; and
an outlet,
wherein one or both of the inlet and the outlet are fluidically coupled to the waste line.

9. The analyzing flow cytometer according to Claim 8, further comprising one or more of the following:
- wherein the valve line comprises from 2 to 6 valves;
- wherein the resistor line comprises from 2 to 6 resistors;
- wherein the fluidic resistance unit comprises an equal number of resistors and valves;
- wherein the inlet of the fluidic resistance unit is fluidically coupled to the waste line such that fluid exiting the waste line enters the fluidic resistance unit;
- wherein the outlet of the fluidic resistance unit is fluidically coupled to the waste line such that fluid exiting the fluidic resistance unit enters the waste line;
- wherein the fluidic resistance unit is comprised within a manifold.

10. The analyzing flow cytometer according to any of the preceding claims,
further comprising a light source configured to irradiate the flow cell at an interrogation point, and/or further comprising a detector configured to collect particle-modulated light from the flow cell.

11. A method of flow cytometrically processing a sample, the method comprising:
a) introducing a particulate sample from a sample container into an analyzing flow cytometer, wherein the analyzing flow cytometer comprises:
a flow cell;
a sample container receiving region;
a sample line configured to fluidically transmit a sample from a sample container in the sample container receiving region to a sample injection port of the flow cell;
a sheath fluid line configured to fluidically couple a sheath fluid reservoir to a sheath fluid injection port of the flow cell;
a waste line fluidically coupled to an outlet of the flow cell; and
a controller configured to modulate a fluidic resistance in the waste line to control fluid velocity in the flow cell; and
b) flow cytometrically processing the sample.

12. The method according to Claim 11, wherein the controller is configured to modulate fluidic resistance in the waste line by increasing fluidic resistance and decreasing fluidic resistance to the waste line, preferably wherein increasing fluidic resistance in the waste line decreases fluid velocity in the flow cell.

13. The method according to Claim 12, with one or more of the following:
- wherein the decrease in fluid velocity in the flow cell is sufficient for particle imaging;
- wherein the decreased fluid velocity in the flow cell has a flow rate between 0.5 m/s and 2 m/s;
- wherein the decreased fluid velocity in the flow cell has a flow rate of 1 m/s;
- wherein decreasing fluidic resistance in the waste line increases fluid velocity in the flow cell, preferably wherein the increase in fluid velocity in the flow cell is sufficient for particle analysis, more preferably wherein the increased fluid velocity in the flow cell has a flow rate between 2.5 m/s and 7.5 m/s, even more preferably wherein the increased fluid velocity in the flow cell has a flow rate of 5 m/s.

14. The method according to any of the claims 11-13, wherein the analyzing flow cytometer is configured to provide an option to select among two or more different fluid velocities in the flow cell to a user and the method comprises selecting a fluid velocity, the method preferably further comprising one or more of the following:
- wherein the option to select among two or more different fluid velocities is displayed to the user;
- wherein a first fluid velocity is suitable for particle imaging;
- wherein a second fluid velocity is suitable for particle analysis;
- c) selecting a fluid velocity, preferably wherein the fluid velocity is suitable for particle imaging, and/or wherein the fluid velocity is suitable for particle analysis, more preferably wherein the fluid velocity is between 0.5 m/s and 2 m/s, or
wherein the fluid velocity is 1 m/s, or wherein the fluid velocity is between 2.5 m/s and 7.5 m/s, or wherein the fluid velocity is 5 m/s, preferably wherein c) selecting a fluid velocity occurs before b) flow cytometrically processing the sample, or wherein b) flow cytometrically processing the sample occurs before c) selecting a fluid velocity.

15. The method according to any of the claims 11-14, using an analyzing flow cytometer according to any of the claims 1-10, or an analyzing flow cytometer according to any of the claims 1-10, for use in a method according to any of the claims 11-14.
